# EUROPÄISCHE PATENTANMELDUNG

(11) **EP 1 988 005 A1**
(43) Veröffentlichungstag der Anmeldung: **05.11.2008**
(21) Anmeldenummer: 08008517.8
(22) Anmeldetag: 06.05.2008
(51) Int. Cl.: B62D 25/08, B62D 21/15, B60K 11/04

(54) **Frontaufbau für ein Kraftfahrzeug**

(30) Priorität: 04.05.2007 DE 102007020914
(71) Anmelder: GM Global Technology Operations, Inc., Detroit, MI 48265-3000 (US)
(72) Erfinder: Schmahl, Heinrich, 55128 Mainz (DE)
(74) Vertreter: Strauss, Peter

(57) **Zusammenfassung**

Ein Frontaufbau für ein Kraftfahrzeug umfasst eine Tragstruktur (1, 5, 6), an der ein Kühler (14) befestigt ist und ein Stoßfängerträger (11) dem Kühler (14) so vorgelagert ist, dass er im Falle eines Zusammenstoßes auf den Kühler (14) zu zurückweicht. Die Befestigung des Kühlers (14) an der Tragstruktur (1, 5, 6) ist durch einen Rahmen (13) gebildet, in dem der Kühler (14) gehalten ist und der seinerseits über bei Überschreitung einer Maximalkraft lösende Verbindungselemente (17, 18, 22) an der Tragstruktur (5, 6) verankert ist. Der Rahmen (13) ist an die Gestalt des Stoßfängerträgers (11) und des Kühlers (14) angepasst, um im Falle des Zurückweichens des Stoßfängerträgers (11) früher als der Kühler (14) mit dem Stoßfängerträger (11) in Kontakt zu kommen .

## Beschreibung

Die vorliegende Erfindung betrifft einen Frontaufbau für ein Kraftfahrzeug. Ein solcher Frontaufbau umfasst im Allgemeinen eine Tragstruktur, an der Kühler, Motor und andere Teile befestigt sind, sowie einen vorgebauten Stoßfängerträger. Der Kühler ist im Allgemeinen dem Motorblock vorgelagert, um durch Fahrtwind wirksam gekühlt zu werden. Um das Fahrzeug insgesamt möglichst kompakt zu gestalten, ist man bestrebt, den Abstand zwischen Stoßfängerträger und Kühler einerseits sowie zwischen Kühler und Motorblock andererseits so klein wie möglich zu machen. Daraus resultiert jedoch der Nachteil, dass wenn das Fahrzeug in einen Zusammenstoß verwickelt ist, eine hohe Wahrscheinlichkeit der Beschädigung des Kühlers besteht, so dass auch bei einem leichten Zusammenstoß kostspielige Reparaturen erforderlich werden.

Aufgabe der vorliegenden Erfindung ist, einen Frontaufbau für ein Kraftfahrzeug anzugeben, in welchem der Kühler trotz kompakten Aufbaus gut vor Beschädigung bei einem Zusammenstoß geschützt ist.

Die Aufgabe wird dadurch gelöst, dass bei einem Frontaufbau mit einer Tragstruktur, an der ein Kühler befestigt ist und ein Stoßfängerträger dem Kühler so vorgelagert ist, dass er im Falle eines Zusammenstoßes auf den Kühler zu zurückweicht, die Befestigung des Kühlers an der Tragstruktur durch einen Rahmen gebildet ist, in dem der Kühler gehalten ist und der seinerseits über bei Überschreitung einer Maximalkraft lösende Verbindungselemente an der Tragstruktur verankert ist, und dass der Rahmen an die Gestalt des Stoßfängerträgers und des Kühlers angepasst ist, um im Falle des Zurückweichens des Stoßfängerträgers früher als der Kühler mit dem Stoßfänger in Kontakt zu kommen. Indem der zurückweichende Stoßfängerträger Kraft auf den Rahmen ausübt, werden die Verbindungselemente gelöst, und der Rahmen kann als Ganzes mitsamt dem geschützt darin liegenden Kühler zurückweichen. So kann zum Schutz des Kühlers ein dahinter liegender Freiraum nutzbar gemacht werden, der für eine dauerhafte Platzierung des Kühlers darin nicht zur Verfügung steht, weil die Möglichkeit besteht, dass der Motor oder mit ihm verbundene Teile aufgrund von Schwingungen des Motors in Bezug auf die Tragstruktur zeitweilig in diesen Freiraum vordringen.

Einer einfachen Ausgestaltung zufolge sind die Verbindungselemente durch Überschreitung der Maximalkraft zerstörbar. Insbesondere können die Verbindungselemente als abscherbare Stifte ausgeführt sein. Denkbar ist aber auch die Verwendung von Verbindungselementen, die bei Überschreitung der Maximalkraft elastisch nachgeben, ohne dabei zerstört zu werden.

Um sicherzustellen, dass der Rahmen von dem zurückweichenden Stoßfängerträger früher erfasst wird als der Kühler, kann der Rahmen mit zum Stoßfängerträger hin vorspringenden vertikalen Rippen versehen sein.

Insbesondere können diese Rippen den Kühler seitlich einfassen.

Zweckmäßig ist ferner, wenn der Rahmen an der Tragstruktur über eine Gruppe von unteren Verbindungselementen und eine Gruppe von oberen Verbindungselementen verankert ist, und dass im Falle des Lösens der Verbindungselemente einer der Gruppen die andere Gruppe von Verbindungselementen eine Achse definiert, um die der Kühler schwenkbar ist. Dies ermöglicht insbesondere die Nutzung eines Freiraumes, dessen Tiefe über die vertikale Ausdehnung des Kühlers hinweg nicht konstant ist.

Eine Wärmeträgerleitung erstreckt sich zwischen dem Kühler und der Tragstruktur vorzugsweise benachbart zu der Achse. So ist die Wärmeträgerleitung im Falle des Zurückweichens des Kühlers im Wesentlichen nur einer Torsionsbelastung ausgesetzt, aber keiner starken Scherbelastung, die zum Reißen der Leitung führen könnte.

Um die Lage der Schwenkachse festzulegen, ist vorzugsweise eine der Gruppen von Verbindungselementen ausgelegt, sich unter einer vom Stoßfängerträger auf den Rahmen ausgeübten Kraft früher zu lösen als die andere Gruppe.

Die Tiefe des Freiraumes hinter dem Kühler ist dann zweckmäßigerweise in Höhe der früher lösenden Gruppe von Verbindungselementen tiefer als in Höhe der später lösenden Gruppe.

Weitere Merkmale und Vorteile der Erfindung werden deutlich anhand der nachfolgenden Beschreibung von Ausführungsbeispielen unter Bezugnahme auf die beigefügten Figuren. Es zeigen:
- Fig. 1: eine schematische Seitenansicht eines erfindungsgemäßen Frontaufbaus;
- Fig. 2: einen horizontalen Schnitt durch den Frontaufbau;
- Fig. 3: einen vertikalen Schnitt durch den Frontaufbau;
- Fig. 4: einen zu Fig. 3 analogen Schnitt nach einem Zusammenstoß gemäß einer ersten Ausgestaltung;
- Fig. 5: einen zu Fig. 3 analogen Schnitt nach einem Zusammenstoß gemäß einer zweiten Ausgestaltung; und
- Fig. 6: ein Detail einer lösbaren Verbindung zwischen dem Rahmen des Kühlers und der Tragstruktur.

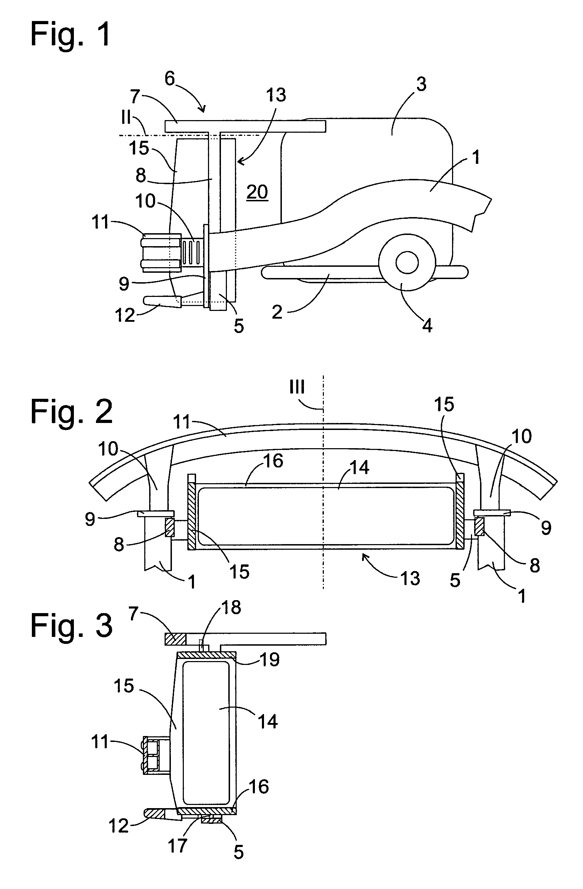

Fig. 1 zeigt eine schematische Seitenansicht eines erfindungsgemäßen Frontaufbaus für ein Kraftfahrzeug. Das Chassis des Fahrzeuges umfasst zwei starr miteinander verbundene Längsträger 1, von denen einer zum Teil in Fig. 1 gezeigt ist. An den Längsträgern 1 ist eine Vorderachse 2 elastisch montiert, die einen Motor 3 sowie eine von diesem angetriebene Antriebswelle 4 trägt.

Die vorderen Enden der zwei Längsträger 1 sind miteinander durch eine unterhalb der Längsträger verlaufende Traverse 5 sowie durch ein sich darüber erstreckendes Trägerteil 6 verbunden. Ein in Draufsicht bogen- oder C-förmiger Querbügel 7 des Trägerteiles 6 ist an den Längsträgern 1 durch vertikale Beine 8 abgestützt und dient als Auflage für eine in der Figur nicht dargestellte Motorhaube.

Die Längsträger 1 schließen jeweils mit einer vertikalen Platte 9 ab, an der, ungefähr in horizontaler Verlängerung der Längsträger 1 über Crashboxen 10 ein Stoßfängerquerträger 11 befestigt ist. Ein unterhalb des Stoßfängerquerträgers 11 an den Platten 9 montierter Hilfsträger 12 dient zur Abstützung des (in der Figur nicht dargestellten) den Stößfängerträger 11 und den Hilfsträger 12 verdeckend montierten Stoßfängers in Unterschenkelhöhe eines typischen Fußgängers.

Zwischen den zwei Platten 9 innerhalb eines von dem Stoßfängerquerträger 11 umschriebenen Bogens ist ein Kühlerrahmen 13 angebracht. Der Kühlerrahmen 13 ist eine im Wesentlichen rechteckige, vorn und hinten offene Struktur aus Profil, in deren Innerem ein in Fig. 1 nicht sichtbarer Kühler 14 montiert ist (siehe z.B. Fig. 2).Der Kühler 14 umfasst in dem Fachmann vertrauter und daher nicht im Detail dargestellter Weise einen oder mehrere Wärmetauscher, von denen einer über Schlauchleitungen mit dem Motor 3 verbunden ist, um vom Kühlwasser des Motors durchflossen zu werden, sowie einen oder, erforderlichenfalls, mehrere Ventilatoren.

Fig. 2 zeigt einen horizontalen Schnitt durch den Frontaufbau entlang der in Fig. 1 mit II bezeichneten Linie. In dieser Figur ist zu erkennen, dass die zwei seitlichen Flanken 15 des viereckigen Kühlerrahmens 13 deutlich weiter zum Stoßfängerquerträger 11 hin vorspringen als die untere Flanke 16 des Rahmens 13 und der Kühler 14 selbst. So ist gewährleistet, dass selbst wenn z.B. ein Zusammenstoß mit Teilüberlappung dazu führt, dass der Stoßfängerquerträger 11 mittig einknickt, die vorspringenden Kanten der seitlichen Flanken 15 früher als der Kühler 14 mit dem zurückweichenden Stoßfängerquerträger 11 in Kontakt kommen und so der Kühlerrahmen 13 zusammen mit dem Kühler 14 nach hinten zurückgedrängt wird.

Fig. 3 zeigt in einem Schnitt entlang der Ebene III aus Fig. 2 einen vertikalen Schnitt durch den erfindungsgemäßen Frontaufbau. In diesem Schnitt sind Verankerungsstifte 17, 18 zu erkennen, die jeweils paarweise von der unteren Flanke 16 bzw. der oberen Flanke 19 des Rahmens 13 abstehen und in Bohrungen der Traverse 5 bzw. des Querbügels 7 eingreifen. Die Verankerungsstifte 17, 18 können zum Beispiel Kunststoffstifte sein, die in fluchtenden Bohrungen der Flanken 16, 19 bzw. der Traverse 5 und des Trägerteiles 6 verankert sind und deren Materialstärke so gewählt ist, dass sie im Falle eines Anschlagens des Stoßfängerquerträgers 11 gegen die Vorderkanten der Flanken 15 abscheren, ohne Schäden an dem Kühlerrahmen 13, der Traverse 5 oder dem Trägerteil 6 zu hinterlassen.

Je nachdem, wie die Festigkeit der Verankerungsstifte 17, 18 oder anderer, gleichwertiger Verbindungselemente zwischen dem Kühlerrahmen 13 und der Tragstruktur bemessen ist, ergeben sich unterschiedliche Szenarien, wenn der Kühlerrahmen 13 von dem zurückweichenden Stoßfängerquerträger 11 verdrängt wird. Wenn sowohl die oberen als auch die unteren Verankerungsstifte 18 bzw. 17 leicht zerstörbar sind, so führt das Trägheitsmoment des Kühlers 14 und seines Rahmens 13 dazu, dass die Stifte 17, 18 gleichzeitig abgeschert werden und Rahmen 13 und Kühler 14 im Wesentlichen unter Beibehaltung ihrer Orientierung im Raum nach hinten, auf den Motor 3 zu, verdrängt werden. Dies kann eine zweckmäßige Lösung sein, wenn wie in der Darstellung der Fig. 1 der zwischen Kühler 14 und Motor 3 vorhandene Freiraum 20 eine über die Höhe des Kühlers 14 hinweg im Wesentlichen gleichbleibende Tiefe hat.

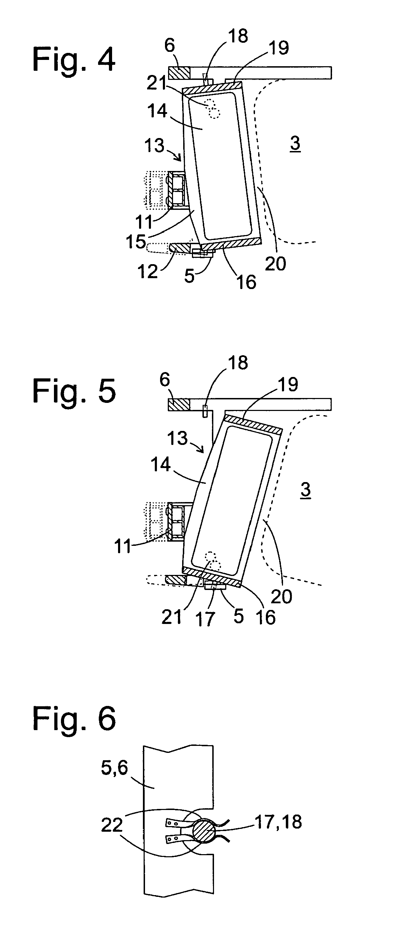

Fig. 4 zeigt einen zu Fig. 3 analogen Schnitt gemäß einer anderen Ausgestaltung, bei der der Freiraum 20 im Normalzustand vor einem Zusammenstoß eine von oben nach unten zunehmende Tiefe hat. Der Stoßfängerquerträger 11 ist durch einen Zusammenstoß aus der als gestrichelter Umriss dargestellten Position in die durchgezogen dargestellte Position unter Stauchung der (in der Fig. nicht gezeigten) Crashboxen 10 zurückgedrängt und hat dabei die unteren Verankerungsstifte 17 abgeschert. Der Kühlerrahmen 13 ist um eine im Wesentlichen durch den Eingriff der oberen Verankerungsstifte 18 in das Trägerteil 6 definierte Achse geschwenkt. Eine Schlauchverbindung, über die Kühlwasser zwischen dem Kühler 14 und dem Motor 3 zirkuliert, ist, wie in der Figur durch gestrichelte Umrisse 21 dargestellt, an einer seitlichen Flanke 15 des Rahmens 13 benachbart zu den oberen Verankerungsstiften 17 herausgeführt. Daher ist die Gefahr, dass durch das Zurückweichen des Kühlers 14 die Kühlwasserleitung 21 beschädigt wird, sehr gering. Es besteht daher eine recht hohe Wahrscheinlichkeit, dass bei einem nicht zu starken Zusammenstoß, der nicht zu einer Verformung der Längsträger 1 geführt hat, das Fahrzeug noch bewegungsfähig ist und aus eigener Kraft, mit weiterhin funktionierendem Kühlsystem, eine Werkstatt erreichen kann.

Fig. 5 zeigt den zu Fig. 4 entgegengesetzten Fall, dass die Tiefe des Freiraumes 20 von oben nach unten abnimmt. Um den Freiraum 20 effektiv zu nutzen, ist es daher hier erforderlich, dass die oberen Verankerungsstifte 18 abgeschert werden, während die unteren Verankerungsstifte 17 intakt bleiben. Da der Höhenunterschied zwischen dem Stoßfängerquerträger 11 und den unteren Verankerungsstiften 17 kleiner als zwischen dem Stoßfängerquerträger 11 und den oberen Verankerungsstiften 18 ist, sind die unteren Verankerungsstifte 17 beim Zusammenstoß einer höheren Beanspruchung ausgesetzt als die oberen. Sie müssen daher, um die in Fig. 5 gezeigte Kippung des Kühlers 14 um eine von den unteren Verankerungsstiften 17 definierte Achse zu realisieren, deutlich belastbarer als die oberen Verankerungsstifte 18 sein.

Bei dieser Ausgestaltung ist die Kühlwasserleitung 21 benachbart zur unteren Flanke 16 aus dem Kühlerrahmen 13 herausgeführt, um die Gefahr des Abscherens der Kühlwasserleitung 21 zu minimieren.

Während bislang nur der Fall einer Verbindung des Kühlerrahmens 13 mit der Tragstruktur über abscherbare Stifte betrachtet wurde, gibt es natürlich zahlreiche andere Möglichkeiten, den Kühlerrahmen 13 so an der Tragstruktur zu befestigen, dass er, ohne Schaden zu nehmen, dem Druck des zurückweichenden Stoßfängerquerträgers 11 ausweichen kann. Fig. 6 zeigt beispielhaft eine Draufsicht auf ein Bruchstück der Traverse 5 oder des Trägerteiles 6 gemäß einer solchen Alternative mit zwei daran befestigten Blattfedern 22, die zwischen sich einen Verankerungsstift 17 oder 18 des Kühlerrahmens 13 gefasst halten. Wenn der Kühlerrahmen 13 einer ausreichenden, in Fig. 6 nach rechts wirkenden Kraft ausgesetzt ist, werden die Blattfedern 22 auseinandergetrieben, und der Verankerungsstift 17, 18 kommt frei, ohne beschädigt zu werden. Es besteht die Möglichkeit, den Kühlerrahmen 14 wieder zu fixieren, indem einfach der Verankerungsstift 17 bzw. 18 zurück zwischen die Blattfedern 22 gedrückt wird.

## Patentansprüche

1. Frontaufbau für ein Kraftfahrzeug, mit einer Tragstruktur (1, 5, 6), an der ein Kühler (14) befestigt ist und ein Stoßfängerträger (11) dem Kühler (14) so vorgelagert ist, dass er im Falle eines Zusammenstoßes auf den Kühler (14) zu zurückweicht, **dadurch gekennzeichnet, dass** die Befestigung des Kühlers (14) an der Tragstruktur (1, 5, 6) durch einen Rahmen (13) gebildet ist, in dem der Kühler (14) gehalten ist und der seinerseits über bei Überschreitung einer Maximalkraft lösende Verbindungselemente (17, 18, 22) an der Tragstruktur (5, 6) verankert ist, und dass der Rahmen (13) an die Gestalt des Stoßfängerträgers (11) und des Kühlers (14) angepasst ist, um im Falle des Zurückweichens des Stoßfängerträgers (11) früher als der Kühler (14) mit dem Stoßfängerträger (11) in Kontakt zu kommen.

2. Frontaufbau nach Anspruch 1, **dadurch gekennzeichnet, dass** die Verbindungselemente (17, 18) durch Überschreitung der Maximalkraft zerstörbar, insbesondere abscherbare Stifte (17, 18), sind.

3. Frontaufbau nach Anspruch 1 oder 2, **dadurch gekennzeichnet, dass** der Rahmen (13) über eine Frontseite des Kühlers (14) zum Stoßfängerträger (11) hin vorspringende vertikale Rippen (15) aufweist.

4. Frontaufbau nach Anspruch 3, **dadurch gekennzeichnet, dass** die Rippen (15) den Kühler (14) seitlich einfassen.

5. Frontaufbau nach einem der vorhergehenden Ansprüche, **dadurch gekennzeichnet, dass** der Rahmen (13) mit der Tragstruktur (1, 5, 6) über eine Gruppe von unteren Verbindungselementen (17) und eine Gruppe von oberen Verbindungselementen (18) verankert ist, und dass im Falle des Lösens der Verbindungselemente (17, 18) einer der Gruppen die andere Gruppe (18, 17) von Verbindungselementen eine Achse definiert, um die der Kühler (14) schwenkbar ist.

6. Frontaufbau nach Anspruch 5, **dadurch gekennzeichnet, dass** eine Wärmeträgerleitung (21) sich benachbart zu der Achse zwischen dem Kühler (14) und der Tragstruktur (1, 5, 6) erstreckt.

7. Frontaufbau nach Anspruch 5 oder 6, **dadurch gekennzeichnet, dass** eine der Gruppen von Verbindungselementen (17, 18) ausgelegt ist, sich unter einer vom Stoßfängerträger (11) auf den Rahmen (13) ausgeübten Kraft früher zu lösen als die andere Gruppe.

8. Frontaufbau nach Anspruch 7, **dadurch gekennzeichnet, dass** die Tiefe eines Freiraums (20) hinter dem Kühler (14) in Höhe der früher lösenden Gruppe (17; 18) von Verbindungselementen tiefer ist als in Höhe der später lösenden Gruppe (18; 17).
